# EUROPEAN PATENT APPLICATION

(11) **EP 1 281 580 A2**
(43) Date of publication of application: **05.02.2003**
(21) Application number: 02011562.2
(22) Date of filing: 24.05.2002
(51) Int. Cl.: B60R 15/02

(54) **Tank for liquids, particularly for industrial and/or agricultural vehicles**

(30) Priority: 29.05.2001 IT PD20010044 U
(71) Applicant: Laser S.r.l., 35010 Borgoricco, Frazione S. Eufemia (Padova) (IT)
(72) Inventor: Randi, Guido, 35100 Padova (IT)
(74) Representative: Modiano, Guido, Dr.-Ing.

(57) **Abstract**

A tank (10) for liquids, particularly but not exclusively for industrial and/or agricultural vehicles, made of plastics and comprising an outer shell (11) suitable to form a first container (12), from one wall (13) of which there protrudes, within the dimensions of the first container, an inner shell (14) suitable to form a second container (15).

## Description

The present invention relates to a tank for liquids, particularly but not exclusively for industrial and/or agricultural vehicles.

Industrial and agricultural vehicles are often provided with tanks, which are fixed laterally to their chassis on corresponding brackets and contain water usually used by the user for the most disparate purposes, such as washing one's hands, et cetera.

For this very purpose it is necessary to use detergent liquids such as soap or the like, which however are contained in separate dosage dispensers and constitute a problem also because they too require a place where they can be located.

In addition to the logistical problems, these dispensers and dosage devices are often lost or forgotten, and the user ends up with having water available but no detergent liquid to use.

The aim of the present invention is to solve or substantially reduce the problems of known types of tank for liquids for industrial and/or agricultural vehicles.

Within this aim, an object of the present invention is to provide a tank that allows to contain both the water and the detergent liquid.

Another object is to provide a tank that has a simple structure.

A further object is to provide a low-cost tank.

A still further object is to provide a tank that can be replaced easily and quickly with the tanks already installed on vehicles.

Another object is to provide a tank that can be manufactured with known types of equipment and technologies, even simply by varying the configuration of existing devices.

This aim and these and other objects that will become better apparent hereinafter are achieved by a tank for liquids, particularly for industrial and/or agricultural vehicles, characterized in that it is made of plastics and comprises an outer shell suitable to form a first container, from one wall of which there protrudes, within the dimensions of said first container, an inner shell suitable to form a second container.

Further characteristics and advantages of the present invention will become better apparent from the following detailed description of a preferred but not exclusive embodiment thereof, illustrated only by way of non-limitative example in the accompanying drawings, wherein:

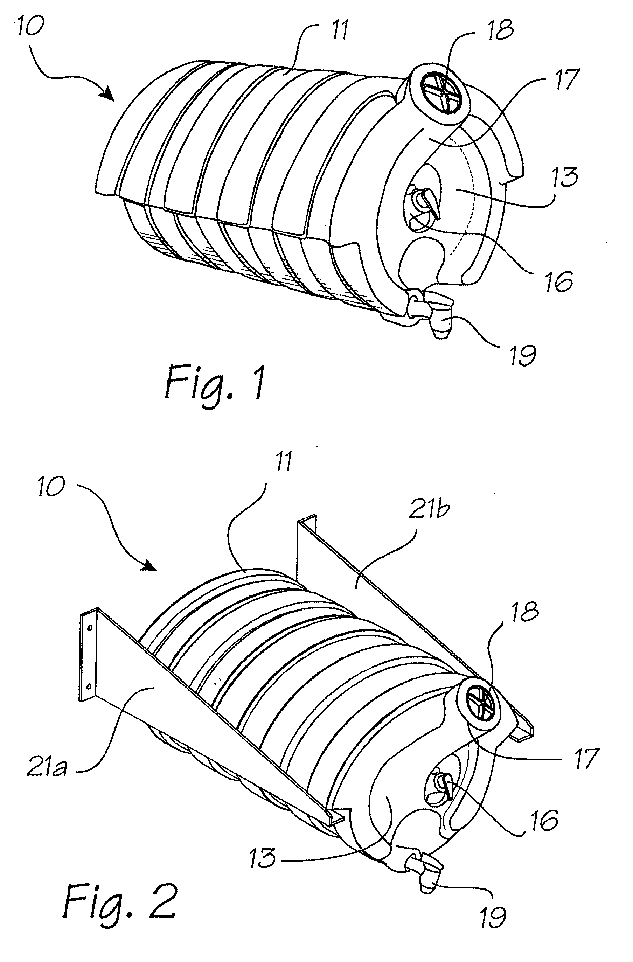

Figure 1 is a perspective view of a tank according to the present invention;
Figure 2 is a perspective view of a tank having the structure according to the invention, associated with supporting brackets;

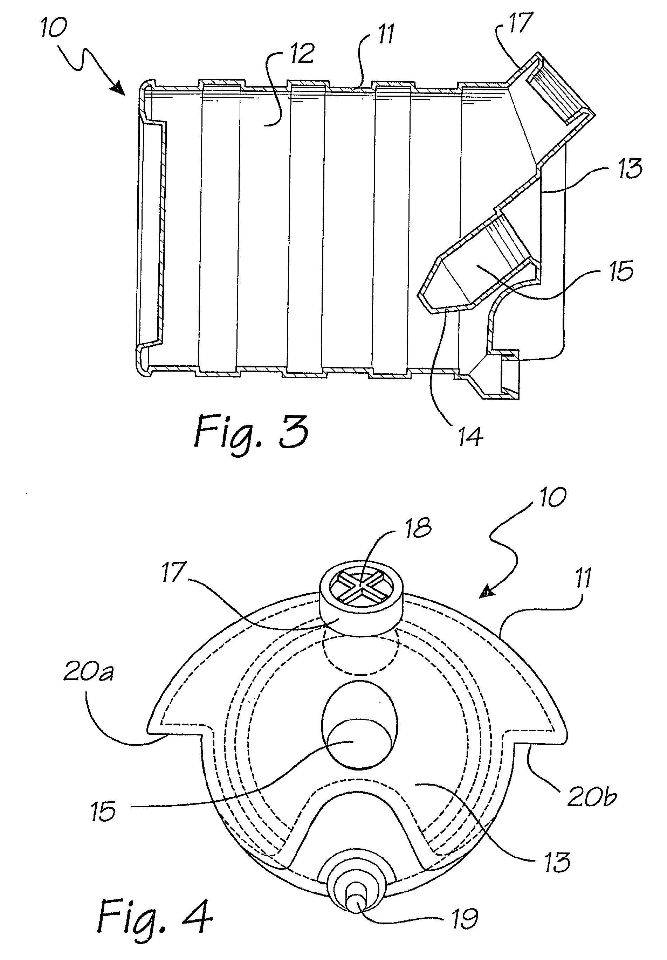

Figure 3 is a longitudinal sectional view of the tank shown in the above figures;
Figure 4 is a front view of the tank shown in the above figures.

With reference to the figures, a tank for liquids, particularly for industrial and/or agricultural vehicles, according to the invention, is generally designated by the reference numeral 10.

The tank 10 comprises an outer shell 11, which is suitable to form a first container 12, which has substantially cylindrical dimensions and is designed to be arranged so that its longitudinal axis is substantially horizontal.

An inner shell 14 protrudes from the front wall 13 of the first container 12 within the dimensions of the first container 12 and is suitable to form a second container 15, which is substantially cup-shaped and has an axis that is inclined downward.

The second container 15 is provided with a closure fitted with a dispenser 16.

The first container 12 has, on the front wall 13, an upper opening that is formed by a tubular segment 17 that is substantially inclined upward and on which a closure plug 18 is engaged.

The first container 12 is further provided in a downward region, again on the front wall 13, with a tap 19 for discharging the liquid contained within the first container 12.

In practice, the second container 15 lies at a central portion of the front wall 13, between the tubular segment 17 and the tap 19.

The first container 12 is shaped externally so as to form two shoulders 20a and 20b, which lie longitudinally and allow to arrange the tank 10 on corresponding brackets 21a and 21b, which are transversely L-shaped and allow to arrange the tank 10 and fix it onto the chassis of an industrial or agricultural vehicle.

Advantageously, the first container 12 is suitable to contain water, while the second container 15 can contain detergent liquid, such as soap or the like.

The tank 10 is made of plastics, advantageously using for example the rotomolding technique.

As regards operation, the tank 10 is fixed by means of the corresponding brackets 21a and 21b onto the chassis of a vehicle of the industrial and/or agricultural type and contains for example water in the first container 12 and soap in the second container 15.

The user who needs for example to wash his hands therefore has comfortably at his disposal water, by means of the tap 19, and soap, by means of the dispenser 16, by reaching the front wall of the tank 10.

It is therefore no longer necessary to use detergent products contained in separate containers.

Moreover, a tank having the structure according to the invention can be manufactured by using molds obtained by modifying existing molds.

The technical details can be replaced with other technically equivalent elements.

The materials, so long as they are compatible with the contingent use, as well as the dimensions, may be any according to requirements.

The disclosures in Italian Utility Model Application No. PD2001U000044 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tank (10) for liquids, particularly for industrial and/or agricultural vehicles, **characterized in that** it is made of plastics and comprises an outer shell (11) suitable to form a first container (12), from one wall (13) of which there protrudes, within the dimensions of said first container, an inner shell (14) suitable to form a second container (15).

2. The tank according to claim 1, **characterized in that** said first container (12) has a substantially cylindrical shape and is designed to be arranged so that its longitudinal axis is substantially horizontal, said second container (15) protruding from a front wall of said container (12) and being substantially cup-shaped with an axis that is inclined downward.

3. The tank according to claim 2, **characterized in that** said second container (15) is provided with a closure fitted with a dispenser (16).

4. The tank according to claims 1 and 2, **characterized in that** said first container (12) has, on said front wall (13), an upper opening (17) for loading liquid fitted with a plug (18), and a tap (19) for discharging liquid.

5. The tank according to one or more of the preceding claims, **characterized in that** said second container (15) is inclined downward from the substantially central portion of said front wall (13), between said upper opening (17) and said tap (19).

6. The tank according to one or more of the preceding claims, **characterized in that** it is produced by rotomolding plastic material.

7. The tank according to one or more of the preceding claims, **characterized in that** said first container (12) contains water and said second container (15) contains detergent liquid such as soap or the like.
